# FASCICULE DE BREVET EUROPEEN

(11) **EP 1 236 174 B1**
(45) Date de publication et mention de la délivrance du brevet: **31.10.2007**
(21) Numéro de dépôt: 99963336.5
(22) Date de dépôt: 26.11.1999
(51) Int. Cl.: G06N 3/00, G06F 19/00

(54) **SYSTEME ET PROCEDE POUR FAIRE EVOLUER UN OBJET VIRTUEL DANS UN ENVIRONNEMENT INTERACTIF**
ANLAGE UND VERFAHREN ZUR ENTWICKLUNG EINES VIRTUELLEN OBJEKTES IN EINER INTERAKTIVEN UMGEBUNG
SYSTEM FOR MANIPULATING A VIRTUAL OBJECT IN AN INTERACTIVE ENVIRONMENT

(43) Date de publication de la demande: 04.09.2002
(73) Titulaire: ETA SA Manufacture Horlogère Suisse, 2540 Grenchen (CH)
(72) Inventeur: FLEURY, Emmanuel, CH-2740 Moutier (CH); BLONDEAU, Fabien, CH-2525 Le Landeron (CH); BARRAS, David, CH-2540 Grenchen (CH); MEISTER, Pierre-André, CH-2502 Biel (CH)
(74) Mandataire: Ravenel, Thierry Gérard Louis
(86) Numéro de dépôt international: PCT/EP1999/009202
(87) Numéro de publication internationale: WO 2001/039117

(56) Documents cités:
- EP-A- 0 899 675
- WO-A-98/15141
- WO-A-98/45005
- WO-A-99/15249
- US-A- 5 444 671

## Description

La présente invention concerne généralement un système pour faire évoluer un objet virtuel dans un environnement interactif. La présente invention concerne également un procédé permettant de faire évoluer un objet virtuel dans un environnement interactif.

Dans la présente description, on entendra par "objet virtuel", un objet définit par un ensemble de paramètres et données. En particulier, on entendra par "objet virtuel évolutif" un objet virtuel dont au moins une partie des paramètres et/ou données peut être modifiée ou évoluer dans le temps.

On entendra par "environnement interactif", un environnement dans lequel au moins une partie des paramètres et/ou données d'un objet virtuel peut évoluer dans le temps ou être modifiée par l'interaction directe ou indirecte d'un utilisateur avec cet objet virtuel.

WO-A-9 845 005 décrit un système pour faire évoluer un caractère virtuel comprenant une ou plusieurs terminaux informatiques et une ou plusieurs unités portatives entre lesquels ce caractère virtuel peut être transmis, ce système comprenant en plus une terminal informatique pour produire de photos d'un ou plusieurs caractères virtuels transmis vers ladite terminal informatique.

On connaît déjà des dispositifs portatifs communément dénommés "compagnons virtuels" ou "compagnons artificiels" dont le "comportement" ou "l'évolution" peut être affecté au moyen d'une interface utilisateur pourvue par exemple de boutons poussoirs ou d'autres organes de commande analogues.

Dans de tels dispositifs portatifs, l'objet virtuel est susceptible d'évoluer dans un environnement interactif relativement limité. Un inconvénient de tels "compagnons artificiels" réside ainsi dans le fait que les possibilités offertes à l'utilisateur pour affecter l'évolution de l'objet virtuel sont fortement limitées par l'interface utilisateur dont ils sont typiquement munis. En effet, du fait de la nécessaire petite taille de ces dispositifs portatifs, et donc du nombre généralement faible d'organes de commande, le nombre d'interactions entre l'utilisateur et l'objet virtuel est très fortement restreint. Cet inconvénient est d'autant plus grand que l'on désire typiquement produire des dispositifs ayant un volume aussi faible que possible afin de ne pas handicaper l'utilisateur lors du port de ce dispositif.

Un autre inconvénient de tels dispositifs portatifs ou "compagnons artificiels", également dû à la nécessaire petite taille de ces dispositifs, réside dans le fait qu'ils sont typiquement pourvus d'affichages n'autorisant qu'une visualisation réduite et primitive de l'objet virtuel et de son environnement. Les dispositifs portatifs de ce type s'avèrent donc être peu attrayants pour les utilisateurs.

On connaît également des applications informatiques susceptibles d'être exécutées sur un terminal informatique, tel un ordinateur personnel ou une console de jeu par exemple, dans lequel un objet virtuel est mis en scène et évolue dans un environnement interactif plus ou moins étendu.

Un avantage de telles applications informatiques par rapport aux dispositifs portatifs susmentionnés réside dans le fait que le terminal informatique sur lequel est exécutée l'application informatique offre des possibilités étendues d'interaction entre l'utilisateur et l'objet virtuel ou son environnement, et des possibilités étendues de visualisation et de modélisation de l'objet virtuel et de son environnement. De nombreuses possibilités d'interaction avec l'objet virtuel et son environnement sont en particulier possibles, par exemple, par l'intermédiaire du clavier du terminal informatique ou par l'intermédiaire d'autres moyens d'interface tel un microphone, une souris ou une manette connectée au terminal informatique.

Néanmoins, un inconvénient de telles applications informatiques réside dans le fait qu'elles nécessitent typiquement un équipement important et peu mobile, ne peuvent pas être exécutées intégralement sur un objet portatif de faible volume et de faible puissance. Il en résulte ainsi une faible mobilité qui rend également ce type de solutions peu attrayantes pour les utilisateurs.

Un inconvénient supplémentaire des deux solutions susmentionnées réside en outre dans le fait qu'elles sont typiquement limitées à une interaction entre un unique utilisateur et un unique objet virtuel.

Encore un autre inconvénient des deux solutions susmentionnées réside en outre dans le fait qu'elles sont typiquement limitées à l'évolution d'un unique objet virtuel dans un unique environnement interactif.

Un but de la présente invention est ainsi de proposer un système ainsi qu'un procédé pour faire évoluer un objet virtuel dans un environnement interactif qui pallie aux multiples inconvénients susmentionnés.

A cet effet, la présente invention a pour objet un système pour faire évoluer un objet virtuel dans un environnement interactif dont les caractéristiques sont énoncées à la revendication 1.

La présente invention a également pour objet un procédé pour faire évoluer un objet virtuel dans un environnement interactif dont les caractéristiques sont énoncées à la revendication 10.

Des modes de réalisations avantageux de la présente invention, décrits dans la suite de la présente description, font l'objet des revendication dépendantes.

Un avantage de la présente invention réside dans le fait que l'utilisateur dispose de possibilités étendues d'interaction avec l'objet virtuel. L'utilisateur dispose par ailleurs à la fois des avantages, en terme de mobilité, des dispositifs portatifs connus de l'art antérieur, et des avantages, en termes d'interactivité, des applications informatiques connues de l'art antérieur. L'utilisateur n'est ainsi nullement limité par les capacités réduites des dispositifs portatifs ou la faible mobilité des applications informatiques.

Selon un mode de réalisation préféré de l'invention, un autre avantage réside dans le fait que différents objets virtuels évoluant chacun dans des environnements différents peuvent néanmoins rentrer en contact et affecter mutuellement leur évolution.

Ces objets, caractéristiques et avantages, ainsi que d'autres, de la présente invention apparaîtront plus clairement à la lecture de la description détaillée qui suit, faite en référence aux dessins annexés donnés à titre d'exemples non limitatifs et dans lesquels :
- la figure 1 illustre schématiquement le système interactif selon la présente invention;
- la figure 2 montre un exemple de réalisation d'un système pour faire évoluer un objet virtuel conforme à la présente invention et comprenant une unité portative et un terminal informatique;
- la figure 3 montre un schéma bloc détaillé d'une unité portative du système de la figure 2;
- la figure 4 permet d'illustrer comment un objet virtuel est susceptible d'évoluer dans l'environnement interactif supporté par le système selon la présente invention;
- la figure 5 montre un mode de réalisation de l'invention dans lequel deux unités portatives du système interagissent l'une avec l'autre;
- la figure 6 illustre schématiquement l'interaction des deux unités portatives de la figure 5; et
- la figure 7 montre encore un autre mode de réalisation de l'invention dans lequel plusieurs terminaux informatiques sont connectés ensemble via un réseau informatique.

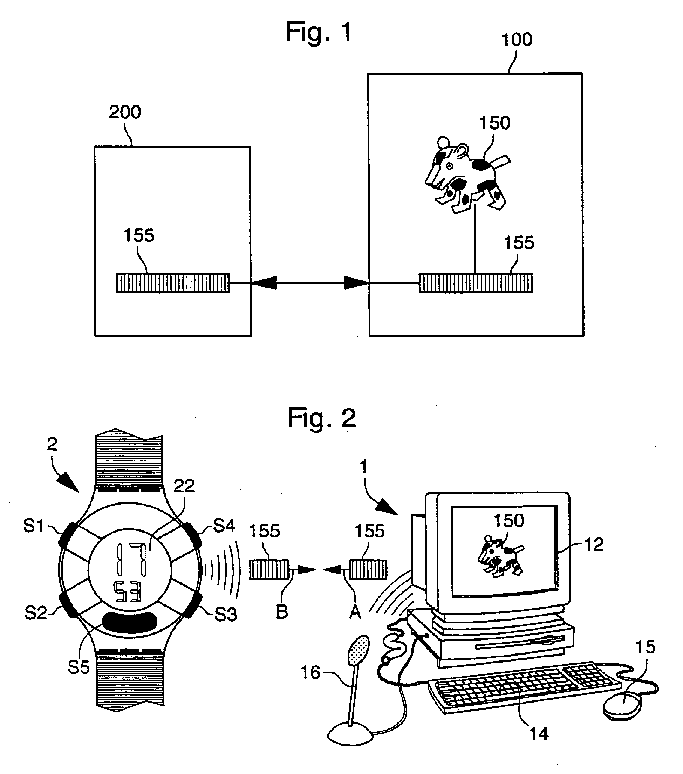

La figure 1 montre schématiquement le principe sous-jacent de la présente invention. Selon la présente invention, comme cela est schématisé sur la figure 1, on propose ainsi un système pour faire évoluer un objet virtuel dans un environnement interactif comprenant un premier environnement interactif 100, dit principal, et un second environnement interactif 200, dit secondaire, plus réduit que l'environnement interactif principal 100, l'utilisateur disposant de moyens d'interface et de moyens de visualisation dans chacun des environnements interactifs 100 et 200.

Un objet virtuel, repéré par la référence numérique 150, est schématisé dans la figure 1 sous la forme d'un animal virtuel, tel un chien. Cet objet virtuel 150 est susceptible d'évoluer dans l'un ou dans l'autre des environnement interactif principal 100 ou secondaire 200, notamment par l'interaction d'un utilisateur dans l'environnement correspondant. Dans la figure 1, on a ainsi schématisé l'objet virtuel 150 comme évoluant dans l'environnement interactif principal 100.

Selon la présente invention, l'objet virtuel 150 est susceptible d'évoluer dans l'environnement interactif secondaire 200 en étant transféré, totalement ou en partie, de l'environnement interactif principal 100 vers l'environnement interactif 200. Préférablement, comme cela est représenté schématiquement dans la figure 1, on ne transmettra ou échangera entre les environnements interactifs principal et secondaire 100 et 200 qu'une partie représentative de l'objet virtuel 150, et en particulier une partie des paramètres et/ou données de l'objet virtuel 150 qui sont susceptibles d'évoluer. Cette partie représentative de l'objet virtuel 150, indiquée par la référence numérique 155 dans la figure 1, sera dénommée dans la suite de la présente description en tant que "paramètre évolutif". Ce paramètre évolutif 155 est par exemple un mot binaire comprenant une pluralité de bits susceptibles chacun d'être modifié par une action de l'utilisateur.

On comprendra que le fait de ne transférer qu'une partie représentative de l'objet virtuel 150, et en particulier la partie "évolutive" de l'objet virtuel 150, tel un mot binaire de quelques bits, présente l'avantage de ne nécessiter qu'un temps de communication relativement court et permet donc l'utilisation de moyens d'émission et de réception à faible débit de transmission.

Préférablement, l'environnement interactif principal 100 dispose de moyens pour extraire cette partie représentative de l'objet virtuel 150, soit le paramètre évolutif 155. Ces moyens d'extraction sont essentiellement des moyens informatiques de traitement permettant de sélectionner ou de définir des données caractéristiques de l'objet virtuel et en particulier les données caractéristiques de l'objet virtuel susceptibles d'évoluer suite, notamment, à une action de l'utilisateur.

Comme on le verra ultérieurement, l'environnement interactif secondaire 200 est supporté par une unité portative que l'utilisateur peut donc transporter avec lui et, selon un mode de réalisation préféré, faire communiquer avec d'autres unités portatives analogues. Selon la présente invention, l'environnement interactif principal 100 est quant à lui supporté par un terminal informatique, préférablement agencé pour exécuter une application informatique par le biais de laquelle l'utilisateur peut interagir avec l'objet virtuel 150.

La figure 2 montre un exemple de réalisation d'un système permettant de faire évoluer un objet virtuel dans un environnement interactif conforme à la présente invention. Ce système comprend au moins une première unité portative indiquée globalement par la référence numérique 2 et au moins un premier terminal informatique indiqué globalement par la référence numérique 1.

L'unité portative 2 peut être tout type de dispositif portatif autonome ayant sa propre source d'alimentation en énergie électrique et au moins une fonction lui permettant de traiter et/ou de mémoriser des données. Préférablement, cette unité portative 2 est un dispositif susceptible d'être porté au poignet de l'utilisateur, telle une montre. On comprendra toutefois que cette unité portative peut prendre d'autres formes telle celle d'un téléphone cellulaire ou d'un agenda électronique par exemple.

La figure 2 montre ainsi une unité portative 2 telle une montre-bracelet ayant notamment des moyens de visualisation 22 tel un affichage à cristaux liquides et des moyens d'interface S1 à S5 que l'utilisateur peut actionner à sa guise pour sélectionner des fonctions et modifier des informations ou données stockées ou traitées dans l'unité portative 2, et en particulier pour interagir avec l'objet virtuel du système. En particulier, les moyens d'interface de l'unité portative comprennent, à titre purement illustratif, une pluralité d'organes de commande tels des boutons-poussoirs S1, S2, S3, S4 et S5 disposés sur la périphérie de l'unité portative 2. On notera que d'autres organes de commande peuvent être envisagés afin de permettre une interaction de l'utilisateur avec les données traitées ou stockées dans l'unité portative 2. En particulier, on notera que l'unité portative 2 peut en complément ou alternativement être pourvue de moyens acoustiques permettant par exemple à un utilisateur d'exécuter des actions par le biais de la parole. La notion de "moyens d'interface" comprend ainsi tout type d'organes ou moyens de commande offrant des possibilités d'interaction entre un utilisateur et l'unité portative 2.

Le terminal informatique 1 peut être tout type de dispositif informatique susceptible d'exécuter des applications informatiques, tel un ordinateur personnel, comme cela est par exemple illustré dans la figure 2. On notera qu'on comprendra également par "terminal informatique", un dispositif informatique dédié à l'exécution d'applications informatiques spécifiques, telle par exemple une console dédiée essentiellement à l'exécution de jeux.

Dans l'illustration de la figure 2, le terminal informatique 1 est par exemple un ordinateur personnel multimédia équipé de moyens de visualisation 12, tel un moniteur, et des moyens d'interface 14, 15 et 16 comprenant notamment un clavier 14, un périphérique de commande 15, telle une souris, et un microphone 16.

Selon la présente invention, l'unité portative 2 ainsi que le terminal informatique 1 du système sont chacun équipés de moyens d'émission et de réception de données, non représentés dans la figure 2, afin d'assurer un transfert de données, et en particulier un transfert du paramètre évolutif 155, du terminal informatique 1 vers l'unité portative 2, comme cela est schématisé par la flèche A dans la figure 2, respectivement de l'unité portative 2 vers le terminal informatique 1, comme cela est schématisé par la flèche B.

Ces moyens d'émission et de réception sont donc préférablement des moyens de communication bidirectionnels. En particulier, ces moyens d'émission et de réception sont préférablement des moyens de communication sans fil, tels des moyens de communications radio, inductifs, optiques, ou acoustiques, permettant une plus grande mobilité et facilité d'utilisation de l'unité portative et du terminal informatique. Dans la présente description, on ne rentrera pas en détails sur la réalisation particulière de ces moyens d'émission et de réception, l'homme du métier étant parfaitement à même de choisir la solution la plus adéquate répondant à ses critères de coûts, de performances et de facilité de fabrication.

Dans le système selon la présente invention, illustré à la figure 2, l'environnement interactif principal (100 dans la figure 1) est donc supporté par le terminal informatique 1, et l'environnement interactif secondaire (200 dans la figure 1) est quant à lui supporté par l'unité portative 2.

On notera que l'utilisateur dispose ainsi de moyens d'interface étendus (clavier 14, souris 15, microphone 16, etc.) pour interagir avec l'objet virtuel 150 dans l'environnement interactif principal supporté par le terminal informatique 1, et des moyens d'interface plus limités (boutons-poussoirs S1, S2, S3, S4, S5) pour interagir avec l'objet virtuel 150 dans l'environnement interactif secondaire supporté par l'unité portative 2. L'utilisateur dispose par ailleurs de moyens de visualisation étendus (moniteur 12) pour visualiser l'objet virtuel 150 dans l'environnement interactif principal et des moyens de visualisation réduits (affichage 22) pour visualiser au moins une partie de l'objet virtuel 150, soit le paramètre évolutif 155, dans l'environnement interactif secondaire.

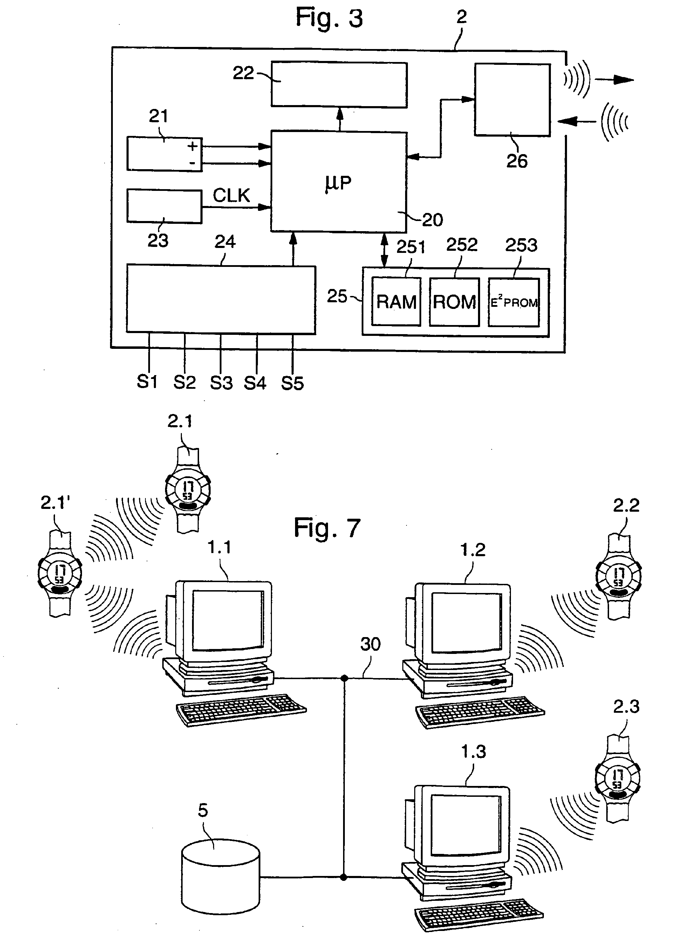

La figure 3 montre de manière plus détaillée, sous la forme d'un schéma bloc, un exemple de réalisation de l'unité portative 2 du système illustré à la figure 2. Cette unité portative 2 comprend en particulier une unité centrale de traitement ou microprocesseur 20 gérant les fonctions de l'unité portative, et une source d'alimentation en énergie électrique 21 connectée notamment au microprocesseur 20 comme cela est illustré dans la figure 3. Cette source d'alimentation 21 assure par ailleurs l'alimentation des autres composants de l'unité portative.

L'unité portative 2 comprend en outre, connectés au microprocesseur 20, le moyen de visualisation 22, tel un affichage à cristaux liquides, un moyen d'horloge 23 tel un oscillateur à quartz permettant de délivrer un signal d'horloge (CLK) au microprocesseur 20, les moyens d'interface 24 répondant à une action sur les organes de commandes S1 à S5.

Connectés au microprocesseur 20, l'unité portative 2 comporte par ailleurs des moyens de mémorisation 25 comprenant notamment une mémoire vive RAM 251, une mémoire morte ROM 252, et une mémoire reprogrammable EEPROM 253. La mémoire reprogrammable EEPROM 253 est notamment destinée à mémoriser le paramètre évolutif (155 dans la figure 1) de l'objet virtuel transmis, par exemple, par le terminal informatique 1.

L'unité portative 2 comprend en outre des moyens d'émission et de réception 26 destinés à émettre et recevoir des données, notamment avec le terminal informatique 1 du système. Ces moyens d'émission et de réception réalisent typiquement, en vue d'une émission de données, une modulation d'un signal électrique de commande sur la base des données à transmettre et une conversion de ce signal électrique de commande en un signal de transmission susceptible d'être transmis au destinataire. En vue d'une réception de données, ces moyens d'émission et de réception 26 réalisent typiquement une conversion d'un signal de transmission incident en un signal électrique modulé et une démodulation de ce signal électrique en données susceptibles d'être traitées par le microprocesseur 20 de l'unité portative 2. Comme cela a déjà été mentionné plus haut, divers moyens d'émission et de réception remplissant les fonctions susmentionnées sont envisageables par l'homme du métier. A titre non limitatif, la Demanderesse a pu constater qu'une liaison sans fil par ondes acoustiques permet aisément des réaliser la communication entre l'unité portative 2 et le terminal informatique 1.

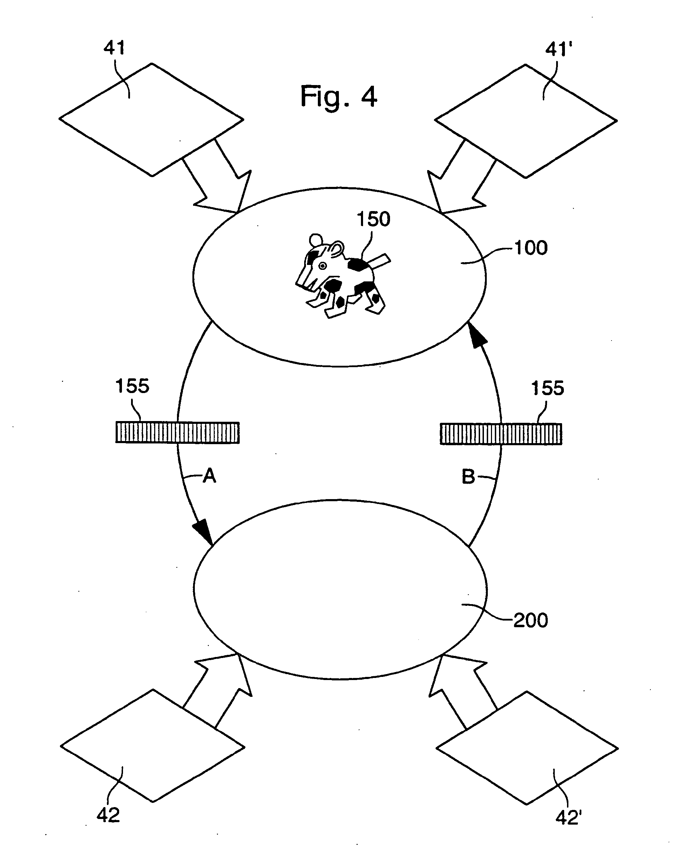

La figure 4 annexée permet d'illustrer comment un objet virtuel est susceptible d'évoluer dans l'environnement interactif supporté par le système selon la présente invention, tel le système de la figure 2. La figure 4 montre l'environnement interactif principal 100 ainsi que l'environnement interactif secondaire 200 schématisés par deux ensembles. Les flèches A et B dans la figure 4 montrent respectivement un transfert du paramètre évolutif 155 de l'environnement interactif principal 100 vers l'environnement interactif secondaire 200 et un transfert du paramètre évolutif 155 de l'environnement interactif secondaire 200 vers l'environnement principal 100.

Un utilisateur du système selon la présente invention, génère ainsi, ou "donne vie", dans un premier temps, à un objet virtuel 150 dans l'environnement interactif principal 100. Cet objet virtuel 150 est par exemple créé sur le terminal informatique supportant l'environnement interactif principal 100 au moyen d'une application informatique. Selon un mode de réalisation de la présente invention qui sera présenté ultérieurement en référence à la figure 7, l'utilisateur a également la possibilité de télécharger un objet virtuel prédéterminé accessible par exemple sur un serveur connecté au terminal informatique via un réseau informatique.

Le bloc 41 en forme de losange, ainsi que tous les autres blocs de même forme dans la figure 4, symbolise une interaction de l'utilisateur avec l'objet virtuel. Plus spécifiquement, le bloc 41 symbolise une interaction de l'utilisateur via les moyens d'interface, tel le clavier, la souris ou le microphone (14, 15, 16 dans la figure 2) du terminal informatique supportant l'environnement interactif principal 100.

Conformément à ce qui est symbolisé par la flèche A, un paramètre évolutif 155 représentatif de l'objet virtuel 150 peut être transféré dans l'environnement interactif secondaire 200. Dans cet environnement secondaire 200, l'utilisateur peut donc interagir avec l'objet virtuel, c'est-à-dire le paramètre évolutif 155, via les moyens d'interface, tel les organes de commande (S1 à S5 dans la figure 2) de l'unité portative supportant l'environnement interactif secondaire 200, comme cela est schématisé par le bloc 42.

Le paramètre évolutif 155 peut être à nouveau transféré vers l'environnement interactif principal 100 conformément à ce qui est symbolisé par la flèche B.

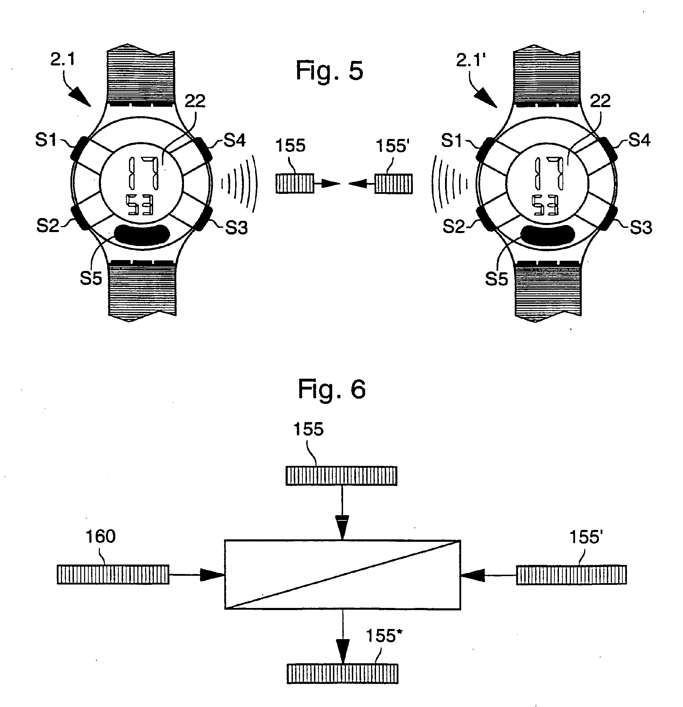

Outre les possibilités d'interaction schématisées par les blocs 41 et 42, l'utilisateur dispose par ailleurs, dans chaque environnement interactif 100 et 200, selon un mode de réalisation de l'invention, de possibilités d'interactions additionnelles, schématisées par les blocs 41' et 42'. Comme on le verra ultérieurement en référence aux figures 5 et 6, le bloc 42' symbolise l'interaction d'une autre unité portative du système. Le bloc 41' symbolise quant à lui l'interaction d'un autre terminal informatique du système comme cela sera illustré ultérieurement en référence à la figure 7.

Selon un mode de réalisation de la présente invention, schématisé dans la figure 5, une première 2.1 et une autre unité portative 2.1' du système sont susceptibles d'échanger au moins une partie de leur paramètre évolutif 155, respectivement 155'. Les moyens d'émission et de réception (26 dans la figure 3) de chaque unité portative 2.1 et 2.1', dans ce mode de réalisation, sont ainsi agencés pour transmettre au moins une partie du paramètre évolutif 155, respectivement 155', de la première unité portative 2.1 vers l'autre unité portative 2.1', respectivement de l'autre unité portative 2.1' vers la première unité portative 2.1.

Dans le système illustré à la figure 5, un objet virtuel évoluant dans l'environnement interactif secondaire d'une première unité portative, par exemple l'unité portative 2.1, et ainsi susceptible d'affecter l'évolution d'un objet virtuel évoluant dans l'environnement interactif secondaire d'une autre unité portative, par exemple l'unité portative 2.1', et, inversement, un objet virtuel évoluant dans l'environnement interactif secondaire de l'autre unité portative 2.1' et susceptible d'affecter l'évolution d'un objet virtuel évoluant dans l'environnement interactif secondaire de la première unité portative 2.1.

Préférablement, chaque unité portative est agencée pour générer un nouveau paramètre évolutif qui est fonction du précédent paramètre évolutif de cette unité portative et de la partie du paramètre évolutif d'une autre unité. La figure 6 montre ainsi un diagramme illustrant la génération d'un nouveau paramètre évolutif, indiqué par la référence numérique 155*, à partir des paramètres évolutifs 155 et 155' de deux unités portatives analogues du système.

Suite à un échange entre deux unités portatives analogues du système de leur paramètre évolutif respectif, chaque unité portative possède ainsi mémorisé, dans ses moyens de mémorisation, son propre paramètre évolutif 155 et le paramètre évolutif 155' transmis par l'autre unité portative. Ces paramètres évolutifs 155 et 155' sont schématisés chacun, dans la figure 6, par un mot binaire de N bits.

Le microprocesseur (20 dans la figure 3) de chaque unité portative est ainsi agencé pour effectuer une opération de mélange entre au moins des parties de chaque paramètre évolutif 155 et 155' pour produire en sortie un nouveau paramètre évolutif 155*, par exemple un nouveau mot binaire de N bits.

Préférablement, comme cela est schématisé dans la figure 6, l'opération de mélange est effectuée en tenant également compte d'un paramètre additionnel variable ou aléatoire, indiqué 160. Ce paramètre additionnel 160 peut par exemple être fourni via le moyen d'horloge (23 dans la figure 3) de chaque unité portative. En particulier, ce paramètre additionnel 160 peut par exemple être l'heure d'une montre formant l'unité portative.

La figure 7 montre un autre mode de réalisation d'un système selon la présente invention constituant une évolution du système interactif décrit plus haut. Dans cette figure 7, on a ainsi schématisé un système comprenant plusieurs unités portatives, 2.1 à 2.3 et 2.1', et plusieurs terminaux informatiques, 1.1 à 1.3. Chaque unité portative et chaque terminal informatique est analogue à l'unité portative et au terminal informatique de la figure 2. On comprendra qu'à chaque unité portative correspond un utilisateur différent, non représenté.

Le système selon la figure 7 présente la particularité que les terminaux informatiques 1.1 à,1.3 sont connectés ou susceptibles d'être connectés ensemble sur un réseau informatique, schématisé par les lignes de connexion repérées 30. Ce réseau informatique 30 est soit un réseau informatique local (LAN), un réseau informatique étendu (WAN), ou une combinaison de ces deux types de réseaux. On notera que les lignes de connexion schématisant le réseau informatique 30 englobent tant un réseau formé de lignes physiques qu'un réseau sans fil. La terminologie "réseau informatique° englobe ainsi, dans la présente description, tout type de système dans lequel au moins deux terminaux informatiques sont susceptibles de communiquer entre eux.

Parallèlement aux terminaux informatiques 1.1 à 1.3, le système comporte en outre un serveur 5, connecté sur le réseau informatique 30, hébergeant des applications et des données qu'un utilisateur est susceptible de téiécharger depuis l'un ou l'autre des terminaux informatiques 1.1 à 1.3. Ce serveur 5 est en outre susceptible de recevoir des données émanant des terminaux informatiques 1.1 à 1.3. Ce serveur 5 peut par exemple héberger différents types d'objets virtuels prédéterminés que l'utilisateur peut télécharger sur son terminal informatique et peut faire évoluer dans son propre environnement interactif.

Au moyen du système selon la figure 7, on comprendra qu'on réalise ainsi une interconnexion de multiples environnements interactifs. Dans ce système, un objet virtuel peut ainsi être affecté, lorsqu'il évolue dans un environnement interactif principal supporté par un premier terminal informatique, par exemple le terminal informatique 1.1, par d'autres objets virtuels ou d'autres utilisateurs agissant sur un autre terminal informatique, par exemple le terminal informatique 1.2 ou 1.3. De même, l'objet virtuel ou l'utilisateur connecté sur un premier terminal informatique 1.1 peut affecter l'évolution d'un objet virtuel évoluant dans l'environnement principal supporté par un autre terminal informatique 1.2 ou 1.3 connecté à ce premier terminal 1.1 via le réseau informatique 30.

Dans la figure 7, on a également schématisé une première unité portative 2.1 et une autre unité portative 2.1' susceptibles d'échanger des données conformément à ce qui a déjà été présenté en référence à la figure 4.

On comprendra que différentes modifications et/ou adaptations peuvent être apportées aux modes de réalisations décrits dans la présente description sans toutefois sortir du cadre de l'invention défini par les revendications annexées.

## Revendications

1. Système pour faire évoluer au moins un premier et un deuxième objet virtuel (150) dans un environnement interactif, ce système comprenant au moins une première (2.1) et une deuxième (2.1') unité portative et au moins un terminal informatique (1, 1.1, 1.2, 1.3) comprenant chacun des moyens d'émission et de réception sans fil (26) pour, d'une part, permettre l'échange d'un premier paramètre (155), dit évolutif, représentatif d'au moins une partie dudit premier objet virtuel entre ladite première unité portative (2.1) et le terminal informatique, et, d'autre part, permettre l'échange d'un deuxième paramètre évolutif (155') représentatif d'au moins une partie dudit deuxième objet virtuel entre ladite deuxième unité portative (2.1') et le terminal informatique, de sorte que lesdits premier et deuxième objets virtuels (150) sont chacun susceptibles d'évoluer, soit, dans un premier environnement interactif (100), dit principal, supporté par le terminal informatique (1; 1.1, 1.2, 1.3), soit, dans un second environnement interactif (200), dit secondaire, supporté par ladite première (2.1), respectivement deuxième (2.1'), unité portative,
**caractérisé en ce que** lesdits moyens d'émission et de réception (26) desdites première et deuxième unités portatives (2.1, 2.1') sont en outre agencés pour transmettre au moins une partie desdits premier et deuxième paramètres évolutifs (155, 155') de la première unité portative (2.1) vers la deuxième unité portative (2.1'), respectivement de la deuxième unité portative (2.1') vers la première unité portative (2.1),
chacune desdites première et deuxième unités portatives (2.1, 2.1') comprenant en outre des moyens (20) pour générer un nouveau paramètre évolutif (155*) qui est fonction du précédent paramètre évolutif (155 ; 155') de cette unité portative et de ladite au moins partie du paramètre évolutif (155' ; 155) transmise par l'autre unité portative.

2. Système selon la revendication 1, **caractérisé en ce que** ledit au moins un terminal informatique (1; 1.1, 1.2, 1.3) est agencé pour exécuter une application informatique permettant d'interagir avec ledit premier et/ou deuxième objet virtuel (150) dans ledit environnement interactif principal (100) et d'extraire ledit paramètre évolutif (155, 155') représentatif d'au moins une partie de cet objet virtuel (150).

3. Système selon la revendication 1, **caractérisé en ce que** chaque unité portative (2.1, 2.1') comprend en outre des moyens d'interface (24, S1 à S5) pour interagir avec l'objet virtuel (150) dans ledit environnement interactif secondaire (200).

4. Système selon la revendication 1, **caractérisé en ce que** ledit nouveau paramètre évolutif (155*) est en outre fonction d'un paramètre variable ou aléatoire (160).

5. Système selon la revendication 4, **caractérisé en ce que** ledit paramètre variable ou aléatoire (160) est fourni par un moyen d'horloge (23) de l'unité portative (2.1, 2.1').

6. Système selon l'une quelconque des revendications 1 à 5, **caractérisé en ce que** lesdits paramètres évolutifs (155, 155', 155*) sont des mots binaires.

7. Système selon l'une quelconque des revendications 1 à 5, **caractérisé en ce que** ce système comporte au moins un autre terminal informatique connecté au dit au moins un terminal informatique via un réseau informatique (30).

8. Système selon l'une quelconque des revendications 1 à 5, **caractérisé en ce que** ce système comporte en outre un serveur (5) connecté au dit au moins un terminal informatique via un réseau informatique (30) et **en ce que** ce serveur (5) héberge une pluralité d'objets virtuels prédéterminés pouvant être téléchargés sur ledit au moins un terminal informatique.

9. Système selon l'une quelconque des revendications précédentes, **caractérisé en ce qu'**au moins l'une desdites première et deuxième unités portatives est un dispositif susceptible d'être porté au poignet d'un utilisateur telle une montre.

10. Procédé pour faire évoluer au moins un premier et un deuxième objet virtuel (150) dans un environnement interactif, cet environnement interactif étant supporté par un système comprenant au moins une première (2.1) et une deuxième (2.1') unité portative et au moins un terminal informatique (1; 1.1, 1.2, 1.3),
un premier paramètre (155), dit évolutif, représentatif d'au moins une partie dudit premier objet virtuel étant échangé entre ladite première unité portative (2.1) et le terminal informatique, et un deuxième paramètre évolutif (155') représentatif d'au moins une partie dudit deuxième objet virtuel étant échangé entre ladite deuxième unité portative (2.1') et le terminal informatique, de sorte que lesdits premier et deuxième objets virtuels (150) sont chacun susceptibles d'évoluer, soit, dans un premier environnement interactif (100), dit principal, supporté par le terminal informatique (1; 1.1, 1.2, 1.3), soit, dans un second environnement interactif (200), dit secondaire, supporté par ladite première (2.1), respectivement deuxième (2.1'), unité portative,
**caractérisé en ce que** ce procédé comprend en outre :
- la transmission d'au moins une partie desdits premier et deuxième paramètres évolutifs (155, 155') de la première unité portative (2.1) vers la deuxième unité portative (2.1'), respectivement de la deuxième unité portative (2.1') vers la première unité portative (2.1) ; et
- la génération, par chacune desdites première et deuxième unités portatives (2.1, 2.1'), d'un nouveau paramètre évolutif (155*) qui est fonction du précédent paramètre évolutif (155 ; 155') de cette unité portative et de ladite au moins partie du paramètre évolutif (155' ; 155) transmise par l'autre unité portative.

11. Procédé selon la revendication 10, **caractérisé en ce que** ledit nouveau paramètre évolutif (155*) est en outre fonction d'un paramètre variable ou aléatoire (160).

12. Procédé selon la revendication 10 ou 11, **caractérisé en ce qu'**au moins une partie dudit premier et/ou deuxième paramètre évolutif (155, 155') est outre échangée avec un autre terminal informatique connecté au dit au moins un terminal informatique via un réseau informatique (30).

## Claims

1. System for making at least a first and a second virtual object (150) evolve in an interactive environment, this system including at least a first (2.1) and a second (2.1') portable unit and at least a computer terminal (1; 1.1, 1.2. 1.3) each including wireless transmitting and receiving means (26) for, on the one hand, permitting the exchange of a first so-called evolving parameter (155), representative of at least a part of said first virtual object between said first portable unit (2.1) and the computer terminal and, on the other hand, permitting the exchange of a second evolving parameter (155') representative of at least a part of said second virtual object between said second portable unit (2.1') and the computer terminal, so that said first and second virtual objects (150) are each capable of evolving, either, in a first so-called main interactive environment (100), supported by the computer terminal (1; 1.1, 1.2. 1.3), or, in a second so-called secondary interactive environment (200), supported by said first (2.1), respectively second (2.1'), portable unit,
**characterized in that** said transmitting and receiving means (26) of said first and second portable units (2.1, 2.1') are also adapted to transmit at least a part of said first and second evolving parameters (155, 155') of said first portable unit (2.1) to the second portable unit (2.1') respectively from the second portable unit (2.1') to the first portable unit (2.1),
each of said first and second portable units (2.1, 2.1') further including means (20) for generating a new evolving parameter (155*) which is a function of the preceding evolving parameter (155; 155') of the portable unit and of said at least part of the evolving parameter (155'; 155) transmitted by the other portable unit.

2. System according to claim 1, **characterized in that** said at least one computer terminal (1; 1.1, 1.2. 1.3) is adapted to execute a computer program allowing interaction with said first and/or second virtual object (150) in said main interactive environment (100) and to extract said evolving parameter (155, 155') representative of at least a part of said virtual object (150).

3. System according to claim 1, **characterized in that** each portable unit (2.1, 2.1') further includes interface means (24, S1 to S5) for interacting with the virtual object (150) in said secondary interactive environment (200).

4. System according to claim 1, **characterized in that** said new evolving parameter (155*) further is a function of a variable or random parameter (160).

5. System according to claim 4, **characterized in that** said variable or random parameter (160) is provided by a clock means (23) of the portable unit (2.1, 2.1').

6. System according to any one of claims 1 to 5, **characterized in that** said evolving parameters (155, 155', 155*) are binary words.

7. System according to any one of claims 1 to 5, **characterized in that** this system includes at least one other computer terminal connected to said at least one computer terminal via a computer network (30).

8. System according to any one of claims 1 to 5, **characterized in that** said system further includes a server (5) connected to said at least one computer terminal via a computer network (30) and **in that** said server (5) houses a plurality of predetermined virtual objects capable of being downloaded on said at least one computer terminal.

9. System according to any one of the preceding claims, **characterized in that** at least one of said first and second portable units is a device capable of being worn on a user's wrist, such as a watch.

10. Method for making at least a first and a second virtual object (150) evolve in an interactive environment, this interactive environment being supported by a system including at least a first (2.1) and a second (2.1') portable unit and at least a computer terminal (1; 1.1, 1.2, 1.3),
a first so-called evolving parameter (155), representative of at least a part of said first virtual object being exchanged between said first portable object (2.1) and the computer terminal, and a second evolving parameter (155') representative of at least a part of said second virtual object being exchanged between said second portable unit (2.1') and the computer terminal, so that said first and second virtual objects (150) are each capable of evolving, either, in a first so-called main interactive environment (100), supported by the computer terminal (1; 1.1, 1.2, 1.3), or, in a second so-called secondary interactive environment (200), supported by said first (2.1), respectively second (2.1'), portable unit,
**characterized in that** this method further includes:
- transmitting at least a part of said first and second evolving parameters (155, 155') of the first portable unit (2.1) to the second portable unit (2.1'), respectively from the second portable unit (2.1') to the first portable unit (2.1); and
- generating, by each of said first and second portable units (2.1, 2.1'), a new evolving parameter (155*) which is a function of the preceding evolving parameter (155; 155') of the portable unit and of said at least part of the evolving parameter (155'; 155) transmitted by the other portable unit.

11. Method according to claim 10, **characterized in that** the new evolving parameter (155*) further is a function of a variable or random parameter (160).

12. Method according to claim 10 or 11, **characterized in that** at least a part of said first and/or second evolving parameter (155, 155') is also exchanged with another computer terminal connected to said at least one computer terminal via a computer network (30).

## Patentansprüche

1. System zum Entwickeln wenigstens eines ersten und eines zweiten virtuellen Objekts (150) in einer interaktiven Umgebung, wobei dieses System wenigstens eine erste tragbare Einheit (2.1) und eine zweite tragbare Einheit (2.1') sowie wenigstens ein Datenverarbeitungsendgerät (1, 1.1, 1.2, 1.3) umfasst, die jeweils Mittel (26) zum drahtlosen Senden und Empfangen enthalten, um einerseits den Austausch eines ersten so genannten Entwicklungsparameters (155), der wenigstens einen Teil des ersten virtuellen Objekts repräsentiert, zwischen der ersten tragbaren Einheit (2.1) und dem Datenverarbeitungsendgerät zu ermöglichen und um andererseits den Austausch eines zweiten Entwicklungsparameters (155'), der wenigstens einen Teil des zweiten virtuellen Objekts repräsentiert, zwischen der zweiten tragbaren Einheit (2.1') und dem Datenverarbeitungsendgerät zu ermöglichen, derart, dass das erste und das zweite virtuelle Objekt (150) sich jeweils entweder in einer ersten interaktiven so genannten primären Umgebung (100), die durch das Datenverarbeitungsendgerät (1; 1.1, 1.2, 1.3) unterstützt wird, oder in einer zweiten interaktiven so genannten sekundären Umgebung (200), die durch die erste tragbare Einheit (2.1) bzw. die zweite tragbare Einheit (2.1') unterstützt wird, entwickeln können,
**dadurch gekennzeichnet, dass** die Sende- und Empfangsmittel (26) der ersten und der zweiten tragbaren Einheit (2.1, 2.1') außerdem so beschaffen sind, dass sie wenigstens einen Teil der ersten und zweiten Entwicklungsparameter (155, 155') der ersten tragbaren Einheit (2.1) zu der zweiten tragbaren Einheit (2.1') bzw. von der zweiten tragbaren Einheit (2.1') zu der ersten tragbaren Einheit (2.1) übertragen können,
wobei sowohl die erste als auch die zweite tragbare Einheit (2.1, 2.1') außerdem Mittel (20) umfasst, um einen neuen Entwicklungsparameter (155*) zu erzeugen, der von dem vorhergehenden Entwicklungsparameter (155; 155') dieser tragbaren Einheit und von wenigstens einem Teil des von der anderen tragbaren Einheit übertragenen Entwicklungsparameters (155'; 155) abhängt.

2. System nach Anspruch 1, **dadurch gekennzeichnet, dass** das wenigstens eine Datenverarbeitungsendgerät (1; 1.1, 1.2, 1.3) so beschaffen ist, dass es eine Datenverarbeitungsanwendung ausführt, die ermöglicht, mit dem ersten und/oder dem zweiten virtuellen Objekt (150) in der interaktiven primären Umgebung (100) in Wechselwirkung zu treten und den Entwicklungsparameter (155, 155'), der wenigstens einen Teil dieses virtuellen Objekts (150) repräsentiert, zu extrahieren.

3. System nach Anspruch 1, **dadurch gekennzeichnet, dass** jede tragbare Einheit (2.1, 2.1') außerdem Schnittstellenmittel (24, S1 bis S5) umfasst, um mit dem virtuellen Objekt (150) in der interaktiven sekundären Umgebung (200) in Wechselwirkung zu treten.

4. System nach Anspruch 1, **dadurch gekennzeichnet, dass** der neue Entwicklungsparameter (155*) außerdem von einem veränderlichen oder zufälligen Parameter (160) abhängt.

5. System nach Anspruch 4, **dadurch gekennzeichnet, dass** der veränderliche oder zufällige Parameter (160) von einem Taktmittel (23) der tragbaren Einheit (2.1, 2.1') geliefert wird.

6. System nach einem der Ansprüche 1 bis 5, **dadurch gekennzeichnet, dass** die Entwicklungsparameter (155, 155', 155*) binäre Wörter sind.

7. System nach einem der Ansprüche 1 bis 5, **dadurch gekennzeichnet, dass** dieses System wenigstens ein weiteres Datenverarbeitungsendgerät umfasst, das mit dem wenigstens einen Datenverarbeitungsendgerät über ein Datenkommunikationsnetz (30) verbunden ist.

8. System nach einem der Ansprüche 1 bis 5, **dadurch gekennzeichnet, dass** dieses System außerdem einen Server (5) umfasst, der mit dem wenigstens einen Datenverarbeitungsendgerät über ein Datenkommunikationsnetz (30) verbunden ist, und dass dieser Server (5) mehrere vorgegebene virtuelle Objekte beherbergt, die in das wenigstens eine Datenverarbeitungsendgerät ferngeladen werden können.

9. System nach einem der vorhergehenden Ansprüche, **dadurch gekennzeichnet, dass** die erste tragbare Einheit und/oder die zweite tragbare Einheit eine Vorrichtung, die am Handgelenk eines Anwenders getragen werden kann, etwa eine Uhr, ist.

10. Verfahren zum Entwickeln wenigstens eines ersten und eines zweiten virtuellen Objekts (150) in einer interaktiven Umgebung, wobei diese interaktive Umgebung durch ein System unterstützt wird, das wenigstens eine erste tragbare Einheit (2.1) und eine zweite tragbare Einheit (2.1') sowie wenigstens ein Datenverarbeitungsendgerät (1; 1.1, 1.2, 1.3) umfasst,
wobei ein erster so genannter Entwicklungsparameter (155), der wenigstens einen Teil des ersten virtuellen Objekts repräsentiert, zwischen der ersten tragbaren Einheit (2.1) und dem Datenverarbeitungsendgerät ausgetauscht wird und ein zweiter Entwicklungsparameter (155), der wenigstens einen Teil des zweiten virtuellen Objekts repräsentiert, zwischen der zweiten tragbaren Einheit (2.1') und dem Datenverarbeitungsendgerät ausgetauscht wird, derart, dass das erste und das zweite virtuelle Objekt (150) sich entweder in einer ersten interaktiven so genannten primären Umgebung (100), die durch das Datenverarbeitungsendgerät (1; 1.1, 1.2, 1.3) unterstützt wird, oder in einer zweiten interaktiven so genannten sekundären Umgebung (200), die von der ersten tragbaren Einheit (2.1) bzw. von der zweiten tragbaren Einheit (2.1') unterstützt wird, entwickeln können,
**dadurch gekennzeichnet, dass** das Verfahren außerdem umfasst:
- Übertragen wenigstens eines Teils des ersten und des zweiten Entwicklungsparameters (155, 155') von der ersten tragbaren Einheit (2.1) zu der zweiten tragbaren Einheit (2.1') bzw. von der zweiten tragbaren Einheit (2.1') zu der ersten tragbaren Einheit (2.1); und
- Erzeugen sowohl durch die erste als auch durch die zweite tragbare Einheit (2.1, 2.1') eines neuen Entwicklungsparameters (155*), der von dem früheren Entwicklungsparameter (155; 155') der jeweiligen tragbaren Einheit und von wenigstens einem Teil des von der anderen tragbaren Einheit übertragenen Entwicklungsparameters (155'; 155) abhängt.

11. Verfahren nach Anspruch 10, **dadurch gekennzeichnet, dass** der neue Entwicklungsparameter (155*) außerdem von einem veränderlichen oder zufälligen Parameter (160) abhängt.

12. Verfahren nach Anspruch 10 oder 11, **dadurch gekennzeichnet, dass** wenigstens ein Teil des ersten und/oder des zweiten Entwicklungsparameters (155, 155') außerdem mit einem weiteren Datenverarbeitungsendgerät ausgetauscht wird, das mit dem wenigstens einen Datenverarbeitungsendgerät über ein Datenkommunikationsnetz (30) verbunden ist.
